# FASCICULE DE BREVET EUROPEEN

(11) **EP 2 271 051 B1**
(45) Date de publication et mention de la délivrance du brevet: **08.03.2017**
(21) Numéro de dépôt: 10166720.2
(22) Date de dépôt: 21.06.2010
(51) Int. Cl.: H04L 29/08

(54) **PROCÉDÉ D'EXÉCUTION D'UN SERVICE APPLICATIF DANS UN ENVIRONNEMENT WEB**
VERFAHREN ZUR AUSFÜHRUNG EINES ANWENDUNGSDIENSTES IN EINEM WEB SERVICES UMGEBUNG
METHOD FOR EXECUTING AN APPLICATION SERVICE IN AN WEB ENVIRONMENT

(30) Priorité: 29.06.2009 FR 0954427
(43) Date de publication de la demande: 05.01.2011
(73) Titulaire: Orange, 75015 Paris (FR)
(72) Inventeur: Bedini, Ivan, 14111 Louvigny (FR); Bertin, Emmanuel, 14530 Luc-Sur-Mer (FR); Laga, Nassim, 14000 Caen (FR)

(56) Documents cités:
- US-A1- 2007 180 020
- US-A1- 2008 113 655
- US-B1- 6 449 650

## Description

La présente invention se rapporte au domaine des services applicatifs accessibles depuis des terminaux d'utilisateur au travers d'un environnement partagé du type environnement Web.

La présente invention concerne plus précisément l'exécution de tels services applicatifs fournis mis à disposition d'utilisateurs sur le Web par des plateformes de service, des plateformes de marché électroniques, ou bien encore des moteurs de recherche, en fonction du rendu fonctionnel du service escompté par un utilisateur.

Un service applicatif offert sur le Web en mode SOA (pour "Services Oriented Architecture" ou "architecture orientée services") est habituellement entièrement définis au moment de sa création par la personne en charge de son développement et de sa mise en oeuvre, de sorte que au moment de l'utilisation de ce service applicatif, ce dernier est exécuté selon des règles et des choix d'exécutions figées dans le temps et toutes préalablement définies par le développeur.

Du fait de l'explosion du Web et de la forte démocratisation de celui-ci, de plus en plus de services applicatifs répondant à des besoins fonctionnels identiques sont rendus disponibles sur le Web par un grand nombre de fournisseurs de services applicatifs. De tels services sont mis à la disposition des utilisateurs, gratuitement ou moyennant paiement, et ceux-ci vont pouvoir les utiliser à leur guise, mais selon des modalités d'exécution nécessairement prédéfinies par avance selon des choix de développement réalisé par son ou ses développeurs. Cette limitation du choix du service faite par l'utilisateur prive généralement l'utilisateur final d'une possibilité de choisir lui même le service le plus adapté pour lui au moment de l'invocation/ exécution du service.

Ces services, composés ou pas, offrent le plus souvent à l'utilisateur une interface unique d'entrée/sortie qui ne répond cependant pas toujours complètement aux préférences et/au contexte d'utilisation qui pourraient être souhaités par l'utilisateur.

Un inconvénient de tels services connus de l'art antérieur est donc lié au fait qu'il nécessite de la part de l'utilisateur une adaptation au contexte d'utilisation du service concerné, sans qu'il puisse toutefois toujours répondre parfaitement à un besoin fonctionnel spécifique ou plus global de l'utilisateur.

Il se peut en effet qu'un utilisateur ait besoin d'exécuter un service applicatif en fonction de son propre contexte d'utilisation et/ou en fonction de ses propres besoins fonctionnels, ces derniers étant susceptibles d'évoluer dans le temps.

Pour tenter de pallier ce dernier inconvénient, des architectures de construction de services applicatifs en réseau, plus connues sous le nom de SaaS (pour "*Software as a Service*") ou SOA (pour *"Service Oriented Architecture*") ont vu le jour, avec pour objectif de tenter au maximum de mettre au centre du développement d'un service applicatif, le besoin fonctionnel de l'utilisateur.

Le document d'art antérieure US2008/011365 décrit un dispositif portable pour l'utilisation d'un service fourni par un système de service à distance comprenant un système de communication et une application de sélection de service basée sur une règle contextuelle et un descripteur de service.

L'avènement de telles architectures a cependant favorisé une prolifération dans la création de services applicatifs répondant sensiblement à de mêmes besoins fonctionnels ayant été formulés par des utilisateurs ou ayant été simplement anticipés par des fournisseurs de services applicatifs. De tels services deviennent de plus en plus concurrentiels, dans le sens où plusieurs fournisseurs de services sont donc capables d'offrir des services équivalents pour satisfaire tout ou partie des mêmes besoins de l'utilisateur final. Il devient donc en conséquence, de plus en plus difficile pour un utilisateur de pouvoir sélectionner sur le Web, au moyen de son terminal - par exemple du type ordinateur PC, assistant personnel numérique ou bien encore téléphone mobile bénéficiant d'une connexion Internet - le ou les services applicatifs susceptibles de répondre au plus prêt à ses propres besoins.

De plus, il n'est pas possible au moyen des techniques connues de l'art antérieur de catégoriser automatiquement des services applicatifs au regard d'une description fonctionnelle des modalités de leur mise en oeuvre et de leur fonction.

Or, les inventeurs ont constaté qu'au regard de critères de simplicité d'usage soulevés par les utilisateurs eux-mêmes, il serait nécessaire et surtout plus simple de sélectionner une fonction d'un service qu'il souhaite exécuter - par exemple un service applicatif d'envoi de SMS (pour "Short Message Service" en anglais), sans avoir à choisir quel service applicatif d'un fournisseur de service ils vont devoir implémenter - un service d'envoi de SMS fourni par l'opérateur Orange (marque déposée) ou un service d'envoi de SMS fourni par l'opérateur Telefonica (marque déposé).

Pour tenter de pallier ce dernier inconvénient visant la catégorisation des services accessibles devant être rendus accessibles à des utilisateurs, des techniques basées sur une approche sémantique et sur une composition automatique de services ont visé l'intégration d'un concept de choix de service dynamique. Ces techniques bloquent actuellement sur la représentation et le traitement de l'ensemble des informations disponibles, notamment dans un environnement Web extrêmement dense sur le plan de l'information et des services applicatifs mis à disposition.

Une des contraintes majeures dans la réalisation de services applicatifs est le fait de devoir ajouter plusieurs détails opérationnels au moment de son développement, qui souvent sont hors du scope du concepteur et de l'utilisateur final du service. Par exemple un utilisateur qui souhaite traduire un texte, est plus intéressé par la fonctionnalité, la qualité et le prix du service rendu que par comment et par qui va être effectué réellement la traduction. Et cette façon de penser est encore plus accentuée dans un environnement global tel que le Web.

Comme mentionné auparavant dans un système traditionnel c'est le concepteur qui définit entièrement les services applicatifs que son service va invoquer, et même quand il fournit la possibilité de choisir entre plusieurs services au moment de l'exécution, il pourvoit la liste définitive des possibles services à utiliser. Cette technique a l'inconvénient d'attribuer la tâche au concepteur qui normalement est plus intéressé par le rendu fonctionnel et qui n'a pas forcement connaissance de tous les services qui seront disponibles au moment de l'exécution. Par exemple, le concepteur d'un service de localisation de contacts du carnet d'adresse va devoir faire appel lors de la conception de ce service à un service de géolocalisation. Dans un système traditionnel, le service applicatif de géolocalisation à invoquer sera défini par le concepteur du service lors du développement son développement. En cas de changement de l'interface de ce service applicatif de géolocalisation ou en cas d'apparition de nouveaux services de géolocalisation plus pertinents ou moins cher, le code du service devra être modifié pour prendre en compte ces modifications d'interface ou pour invoquer un nouveau service de géolocalisation.

Enfin, alors que l'utilisateur final devrait être au centre d'un environnement de services personnalisés, il est de fait souvent appelé à effectuer plusieurs recherches et opérations très contraignantes avant de pouvoir faire appel au service qui lui est nécessaire. C'est à lui de choisir le service le plus adapté à son besoin, à la fois en termes de fonctionnalités rendues et d'autres critères tels son contexte, le cout ou la qualité du service, et il n'est pas guidé dans ce choix.

En alternative, dans un environnement plus "intelligent" basé sur des systèmes sémantiques, tout repose sur l'automatisme de la composition des besoins, mais la distinction entre besoin fonctionnel, caractéristiques techniques (telles que les paramètres de l'interface), caractéristiques non-fonctionnelles (tel que le cout) et caractéristiques d'usage restent encore trop complexes pour aboutir à des résultats directement exploitables dans un environnement dynamique.

Les mécanismes issus de la communauté du web sémantique, comme les ontologies, cherchent à relier de façon systématique le vocabulaire que l'utilisateur emploie pour décrire ses besoins au vocabulaire technique pouvant caractériser les services. Au même titre les technologies basées sur un canevas (*"framework" en anglais)* sémantique pour la composition automatique de services Web, SWS ("*Semantic Web Service"pour service Web sémantique),* comme WSMF ("*Web Service Modeling Framework" pour Canevas de modélisation de services Web),* permettent de définir un objectif, mais qui reste très difficile à lier de façon complètement automatique à un service applicatif concrètement proposé sur le Web.

Ces deux solution restent cependant très complexes sur le plan de l'implémentation et n'ont pas débouchés sur des résultats industriels pour l'instant de part la difficulté à mettre en relation les aspects usage et les aspects applicatifs d'un service. En effet, la description fonctionnelle d'un service et sa définition applicative sont confondus dans ce type de solutions. La représentation de la connaissance nécessaire pour permettre à un automate de réaliser en complète autonomie un choix dynamique du service reste très complexe et complètement confié au développeur du service.

Les mécanismes plus légers comme le classement par mots-clés sont insuffisant car ils permettent uniquement une catégorisation de haut-niveau et arborescente des services. Cette technique fournit une architecture très simple à maintenir et à déployer, mais insuffisante à une réalisation dynamique de résolution de service. Les limites sont fortement liées à la nécessité d'une importante intervention humaine dans le filtrage de résultats d'une recherche simplement basée sur des mots clés relatifs à quelque champs prédéfinit.

Des fournisseurs de services sur le Web, qu'il s'agisse d'entreprises, ou de plateformes d'agrégation de services tierces, peuvent offrir une solution technique se situant entre les deux précédentes. Cette solution prévoit la possibilité de lier à des informations concernant l'utilisateur du service le contenu de la réponse renvoyée par l'exécution même du service. Par exemple les services basés sur l'*advertisement* permettent d'adapter le type d'annonce à utiliser selon le profil de l'utilisateur final et sur la base d'une catégorisation préalable des annonces et des profils utilisateurs et de correspondances entre catégorie d'annonces et catégorie d'utilisateurs.

Les limites techniques de cette solution sont qu'elle nécessite la déclaration au préalable des services à exécuter pour intégrer ensuite des informations en temps réel capable de modifier dynamiquement l'exécution du service. Aucun système générique et avancé n'est définit pour élargir cette dynamique au choix du service et à la possibilité d'en composer plusieurs, afin de répondre à un besoin fonctionnel plus avancé.

En conclusion, nous retrouvons dans toute les solutions existantes le problème du caractère statique du lien entre besoin fonctionnel, exprimé par la vue utilisateur final, et le ou les service/s qui répondent à ce besoin. Ce problème se traduit premièrement au niveau du concepteur qui voudrait réutiliser des services de base offerts sur une plateforme (par exemple en mode SOA), pour dessiner un service plus complet. Dans ce cas c'est au moment de la conception du service composé que le développeur doit choisir parmi une liste fermée de services unitaires existant, et donc parmi les services à sa disposition au moment de la conception sans pouvoir tenir compte d'autres facteurs qui peuvent survenir au moment réel de l'exécution du service même (i.e. le contexte dans lequel se trouve l'utilisateur, ses préférences et l'arrivée de nouveaux services répondant au même besoin). Deuxièmement l'utilisateur final ne peut intervenir au moment de l'utilisation du service pour choisir le meilleur service à sa disposition, le plus adapté à ses besoins, si ce dernier n'est pas celui qui a été retenu par le développeur.

La présente invention offre une solution qui ne présente pas les inconvénients précités en proposant un mécanisme dynamique permettant à un utilisateur de choisir fonctionnellement un service applicatif répondant à un besoin fonctionnel spécifique, juste avant l'exécution de celui-ci et sans que cet utilisateur n'ait à choisir ni à sélectionner lui-même le service applicatif à exécuter, lequel service applicatif aura été mis à disposition par un fournisseur de services et répondra parfaitement au besoin fonctionnel choisi par l'utilisateur.

A cet effet, l'invention propose une solution permettant de pallier l'ensemble des inconvénients précités à travers un procédé d'exécution d'un service applicatif accessible depuis un terminal d'utilisateur et exécuté à partir d'au moins une plateforme de services applicatifs à laquelle ledit terminal est connecté par l'intermédiaire d'au moins un réseau de communication, ledit procédé étant caractérisé en ce qu'il comprend :
▪ une étape de sélection par un utilisateur d'au moins un modèle fonctionnel descriptif d'un service applicatif à exécuter, parmi un ensemble de modèles fonctionnels descriptifs de services applicatifs;
▪ une étape d'exécution d'au moins un service applicatif sélectionné par l'intermédiaire de ladite plateforme auprès d'au moins un fournisseur de services, ledit service applicatif sélectionné correspondant audit modèle fonctionnel descriptif et respectant au moins une règle de mise en oeuvre propre dudit modèle fonctionnel descriptif;
▪ une étape de transmission par ladite plateforme au terminal d'utilisateur d'un résultat d'exécution dudit service applicatif sélectionné, pour présentation sur le terminal dudit utilisateur.

Ainsi, de façon avantageuse, l'utilisateur se contente de préciser auprès d'une plateforme de services adaptée pour délivrer ses propres service applicatifs ou des services applicatifs qu'elle relaie de fournisseurs d'applications au travers un environnement Web, uniquement ses besoins fonctionnels sans avoir à choisir lui-même quel doit être le service applicatif, c'est-à-dire l'application logicielle accessible au travers un environnement Web par exemple, et de façon non limitative, qui devra être exécuté pour répondre à son besoin fonctionnel. A cet effet, l'utilisateur se contente de notifier à la plateforme de service, par l'intermédiaire de son terminal de communication, quel est son besoin fonctionnel - par exemple le besoin d' "envoyer un message SMS", ou bien encore, le besoin d' "effectuer une traduction d'un texte d'une première langue vers une deuxième langue", etc. - en sélectionnant auprès de ladite plateforme et dans une première étape du procédé selon l'invention au moins un modèle fonctionnel descriptif d'un service applicatif à exécuter, parmi un ensemble de modèles fonctionnels descriptifs de services applicatifs, lesdits modèles fonctionnels descriptifs ayant été auparavant définis, par exemple par des concepteurs de services.

A ce modèle fonctionnel descriptif est associée au moins une règle de mise en oeuvre du besoin fonctionnel que devra respecter le service applicatif répondant à ce besoin et qui sera au final exécuté en respect du besoin fonctionnel exprimé à la première étape de sélection par l'utilisateur. La ou lesdites règles de mise en oeuvre auront été au préalable associées au modèle fonctionnel, par exemple par un concepteur de services.

Cette règle ou ces différentes règles de mise en oeuvre permettent notamment de s'assurer de l'adéquation entre le besoin fonctionnel exprimé par l'utilisateur et la réponse à celui-ci apportée par le service applicatif (application logicielle par exemple) qui sera au final exécuté. Sur la base de cette règle de mise en oeuvre définie par exemple par le concepteur au moment de la création/ définition fonctionnelle d'un service applicatif, la plateforme de service applicatif se charge d'identifier parmi ses propres services applicatifs ou bien auprès d'autres fournisseurs de services applicatifs qui lui sont connectés au travers un réseau de communication, quel est ou quels sont les services applicatifs (applications logicielles) qui correspondent parfaitement au modèle fonctionnel descriptif et qui respectent la règle de mise en oeuvre propre de celui-ci.

Une fois ce service applicatif identifié par la plateforme de services, celui-ci est exécuté, le résultat d'exécution étant présenté à l'utilisateur sur son terminal de communication - par exemple un terminal d'ordinateur, ou encore un terminal du type assistant personnel numérique ou téléphone mobile bénéficiant d'une connexion à un réseau de communication et adapté pour accéder à un environnement Web.

Ainsi, l'utilisateur n'a plus à choisir, probablement de façon non optimale en termes d'adéquation avec ses besoins fonctionnels, quel est le service applicatif qu'il devra exécuter - par exemple, le service Orange (marque déposé) d'envoi de messages SMS. Il lui suffit désormais et de façon avantageuse de préciser son besoin fonctionnel au travers une plateforme de services - dans le cadre de l'exemple non limitatif ci-dessus : "besoin d'envoyer un message SMS en France". C'est ensuite la plateforme de services qui se charge en considération du modèle fonctionnel descriptif sélectionné par l'utilisateur et en considération de la règle de mise en oeuvre définie par le concepteur en lien avec ce dernier, de déterminer le service applicatif qui répondra le mieux à ce modèle et à sa règle associée, avant de procéder à l'exécution de ce dernier, de façon transparente pour l'utilisateur.

De même, le concepteur d'un service composé, par exemple un service de localisation de contacts du carnet d'adresse, n'a plus à définir lui-même le service applicatif de géolocalisation à invoquer, mais peut se contenter de préciser son besoin fonctionnel de géolocalisation. C'est ensuite la plateforme de services qui se charge en considération du modèle fonctionnel descriptif sélectionné par le concepteur et en considération de la règle de mise en oeuvre en lien avec ce dernier, de déterminer le service applicatif qui répondra le mieux à ce modèle et à sa règle associée, avant de procéder à l'exécution de ce dernier, cette détermination étant réalisée de façon dynamique lorsqu'un utilisateur utilise le service.

Dans un mode de réalisation particulier de l'invention, préalablement à ladite étape d'exécution, ledit procédé comprend une étape de transmission par ladite plateforme de services audit terminal d'utilisateur, d'une liste de services applicatifs sélectionnés auprès d'au moins un fournisseur de services et adaptés pour mettre en oeuvre, respectivement, ledit modèle fonctionnel descriptif sélectionné en tenant compte de ladite règle de mise en oeuvre.

Une telle approche permet à l'utilisateur de choisir entre un nombre restreint de services applicatifs susceptibles de provenir ou d'être proposés par différents fournisseurs de services, lesquels auront été regroupés dans une liste de services dès lors qu'ils correspondront bien au modèle fonctionnel descriptif et à sa règle de mise en oeuvre associée.

Dans un mode de réalisation particulier de l'invention, le procédé d'exécution comprend préalablement à ladite première étape de transmission, une étape de création dynamique de ladite liste de services comprenant :
▪ une sous-étape de détermination d'au moins une règle de mise en oeuvre associée audit modèle fonctionnel descriptif sélectionné ;
▪ une sous-étape d'identification auprès d'au moins un fournisseur de services applicatifs, d'au moins un service applicatif mettant en oeuvre ladite règle de mise en oeuvre ;
▪ une sous-étape d'enregistrement d'une association dudit modèle fonctionnel descriptif avec ledit au moins un service applicatif identifié à ladite sous-étape d'identification.

Préférentiellement, ladite règle de mise en oeuvre définit au moins une pré-condition et au moins une post-condition d'exécution dudit service applicatif correspondant audit modèle fonctionnel descriptif sélectionné.

Un tel choix technique s'avère particulièrement adapté dans un contexte de composition de services applicatifs plus complexes définis par combinaison de services applicatifs "unitaires". Ainsi, si pour répondre à un besoin fonctionnel exprimé sous la forme d'une sélection d'un modèle fonctionnel descriptif, les services applicatifs A et B doivent être combinés, une pré-condition d'exécution du service A pourra concerner la génération d'un paramètre de sortie correspondant à un paramètre d'entrée nécessaire à une exécution du service B et, une post-condition du service A pourra correspondre à une vérification visant à s'assurer que le format du paramètre de sortie généré par l'exécution du service A est bien conforme au format du paramètre d'entrée requis par le service B. Les pré-conditions pourront également consister en des critères de choix du service applicatif à exécuter selon des paramètres propres au service applicatif, tel son cout, ou selon des paramètres dynamiques propres à l'utilisateur, que nous appellerons plus loin concepts facilitateurs, tels que sa localisation, sa présence ou sa langue de préférence, voire selon des paramètres externes et au service applicatif et à l'utilisateur, tels la date ou l'heure. Les règles de mise en oeuvre pourront se combiner les unes avec les autres selon des conditions logiques.

Dans un mode de réalisation possible de l'invention, ledit service applicatif est sélectionné et exécuté dynamiquement par ladite plateforme.

Un tel mode de réalisation s'avère particulièrement intéressant en ce qu'il rend le procédé d'exécution parfaitement automatique et transparent pour l'utilisateur, de sorte que le service applicatif (application logicielle) le "mieux" adapté, c'est-à-dire répondant parfaitement au modèle fonctionnel descriptif et à sa au moins une règle de mise en oeuvre, pour l'utilisateur sera exécuté directement par la plateforme de services.

Dans un autre mode de réalisation possible de l'invention, ledit service applicatif est sélectionné par l'utilisateur à partir de ladite liste de services applicatifs reçue sur son terminal d'utilisateur suite à ladite première étape de transmission, une information de sélection étant ensuite remonté depuis ledit terminal d'utilisateur à ladite plateforme en tant que paramètre d'entrée de ladite étape d'exécution.

Ce mode de réalisation permet en cas de doute, ou simplement dans un contexte d'offre de plusieurs services applicatifs adaptés au besoin fonctionnel exprimé par un utilisateur, d'impliquer l'utilisateur dans le choix du ou des services applicatifs devant être exécuté, ce qui introduit une dimension interactive avec l'utilisateur, laquelle peut s'avérée pertinent dans certains contextes d'utilisation.

Dans un mode de réalisation avantageux de l'invention, ladite étape d'exécution comprend les sous-étapes suivantes:
▪ appel à distance dudit service applicatif sélectionné auprès d'un fournisseur de services, ledit appel à distance tenant compte d'au moins un identifiant dudit service applicatif sélectionné ;
▪ exécution dudit service applicatif sélectionné par un terminal d'exécution propre dudit fournisseur de services, de façon à produire au moins un résultat d'exécution ;
▪ transmission dudit résultat d'exécution par ledit terminal d'exécution à ladite plateforme de services.

Dans ce mode de réalisation avantageux de l'invention, l'exécution du service est réalisée directement par le fournisseur dudit service applicatif sélectionné, la plateforme de service au sens de l'invention servant uniquement d'intermédiaire entre l'utilisateur et le fournisseur du service, de façon parfaitement transparente pour l'utilisateur.

Dans un autre mode de réalisation possible de l'invention, ladite étape d'exécution comprend les sous-étapes suivantes:
▪ une sous-étape de détermination d'au moins une règle de mise en oeuvre appel à distance dudit service applicatif sélectionné auprès d'un fournisseur de services, ledit appel à distance tenant compte d'au moins un identifiant dudit service applicatif sélectionné ;
▪ exécution dudit service applicatif appelé par ladite plateforme de service, de façon à produire au moins un résultat d'exécution.

Dans cet autre mode de réalisation possible, la plateforme de services au sens de l'invention se charge d'exécuter elle-même le ou les services applicatifs sélectionnés.

Dans un autre mode de réalisation avantageux de l'invention, ladite étape d'exécution dynamique tient compte d'au moins une information représentative d'une préférence d'utilisation.

La prise en compte d'une telle préférence d'utilisation permet d'affiner encore plus la sélection d'un ou de plusieurs services applicatifs répondant à un ou plusieurs besoins fonctionnels exprimés par un utilisateur, en tenant compte d'au moins un autre critère propre de préférences d'usage préalablement définies par l'utilisateur lui-même, voir par des intervenants intermédiaires tels que l'administrateur de la plateforme de services applicatifs. Ainsi, à titre de simple exemple illustratif et non limitatif de ce qui précède, un utilisateur pourra par exemple définir une liste de services applicatifs ou de fournisseurs de services qu'il souhaitera ne jamais utiliser, ou bien encore définira des règles d'utilisation du type :
▪ sélectionner le service applicatif le moins cher, parmi une sélection de services applicatifs sélectionnés par la plateforme de services comme répondant au modèle fonctionnel descriptif sélectionné par l'utilisateur, ainsi qu'à sa règle de mise en oeuvre associée;
▪ etc.

Dans un mode de réalisation particulier de l'invention, ladite au moins une information est stockée dans une zone mémoire de ladite plateforme de services et appartient au groupe comprenant :
▪ information représentative d'une préférence d'utilisation préalablement renseignée par ledit utilisateur et mémorisée dans un profil d'utilisateur propre de celui-ci ;
▪ information représentative d'une préférence d'utilisation dudit service applicatif sélectionné, ladite information étant préalablement renseignée par un concepteur dudit modèle descriptif fonctionnel en relation avec ladite règle de mise en oeuvre ;
▪ information représentative d'une préférence d'utilisation dudit service applicatif sélectionné, ladite information étant préalablement renseignée par un administrateur de ladite plateforme et mémorisée dans une zone mémoire de cette dernière.

Dans un autre mode de réalisation possible de l'invention, ladite étape d'exécution est une étape d'exécution d'une combinaison d'au moins deux services applicatifs sélectionnés par l'intermédiaire de ladite plateforme auprès d'au moins un fournisseur de services, respectivement, ladite combinaison correspondant audit modèle fonctionnel descriptif et respectant au moins une règle de mise en oeuvre propre dudit modèle fonctionnel descriptif.

Un tel mode de réalisation permet d'offrir à l'utilisateur des services applicatifs complexes à partir d'une combinaison d'au moins deux services applicatifs unitaires, ladite combinaison permettant de répondre à l'ensemble d'un besoin fonctionnel "complexe" exprimé par l'utilisateur - par exemple, calculer un itinéraire routier jusqu'à un point de destination défini par l'utilisateur, en fonction d'une position géo-localisée de ce dernier. En réponse à un tel exemple d'expression d'un besoin fonctionnel "complexe", le résultat de calcul d'itinéraire sera obtenu par exécution combinée dans un premier temps d'un service de géolocalisation du terminal de l'utilisateur, puis d'un calcul d'itinéraire tenant compte pour paramètre d'entrée de la position de géolocalisation obtenu pour l'utilisateur.

L'invention concerne également une plateforme de services applicatifs proposant au moins un service applicatif accessible à partir d'un terminal d'utilisateur auquel elle est connectée par l'intermédiaire d'au moins un réseau de communication.

Selon l'invention, une telle plateforme comprend avantageusement :
▪ des moyens de sélection par un utilisateur d'au moins un modèle fonctionnel descriptif d'un service applicatif à exécuter, parmi un ensemble de modèles fonctionnels descriptifs de services applicatifs;
▪ des moyens d'exécution d'au moins un service applicatif sélectionné par l'intermédiaire de ladite plateforme auprès d'au moins un fournisseur de services, ledit service applicatif sélectionné correspondant audit modèle fonctionnel descriptif et respectant au moins une règle de mise en oeuvre propre dudit modèle fonctionnel descriptif ;
▪ des moyens de transmission par ladite plateforme au terminal d'utilisateur d'un résultat d'exécution dudit service applicatif sélectionné, pour présentation sur le terminal dudit utilisateur.

L'invention concerne aussi un terminal d'utilisateur adapté pour exécuter un service applicatif accessible à partir d'au moins une plateforme de services applicatifs à laquelle il est connecté par l'intermédiaire d'au moins un réseau de communication. Selon l'invention, un tel terminal comprend avantageusement :
▪ des moyens de sélection par un utilisateur d'au moins un modèle fonctionnel descriptif d'un service applicatif à exécuter, parmi un ensemble de modèles fonctionnels descriptifs de services applicatifs;
▪ des moyens pour exécuter au moins un service applicatif sélectionné par l'intermédiaire de ladite plateforme auprès d'au moins un fournisseur de services, ledit service applicatif sélectionné correspondant audit modèle fonctionnel descriptif et respectant au moins une règle de mise en oeuvre propre dudit modèle fonctionnel descriptif;
▪ des moyens d'affichage d'au moins un résultat d'exécution dudit service applicatif sélectionné, ledit résultat d'exécution étant reçu de ladite plateforme par le terminal d'utilisateur, au travers ledit réseau de communication.

L'invention concerne encore un produit programme d'ordinateur téléchargeable depuis un réseau de communication et/ou stocké sur un support lisible par ordinateur et/ou exécutable par un microprocesseur, caractérisé en ce qu'il comprend des instructions de code de programme pour la mise en oeuvre d'un procédé d'exécution d'un service applicatif accessible depuis un terminal d'utilisateur et exécuté à partir d'au moins une plateforme de services applicatifs à laquelle ledit terminal est connecté par l'intermédiaire d'au moins un réseau de communication, lorsqu'il est exécuté sur un ordinateur, ledit procédé tel que celui précité étant caractérisé en ce qu'il comprend:
▪ une étape de sélection par un utilisateur d'au moins un modèle fonctionnel descriptif d'un service applicatif à exécuter, parmi un ensemble de modèles fonctionnels descriptifs de services applicatifs;
▪ une étape d'exécution d'au moins un service applicatif sélectionné par l'intermédiaire de ladite plateforme auprès d'au moins un fournisseur de services, ledit service applicatif sélectionné correspondant audit modèle fonctionnel descriptif et respectant au moins une règle de mise en oeuvre propre dudit modèle fonctionnel descriptif ;
▪ une étape de transmission par ladite plateforme au terminal d'utilisateur d'un résultat d'exécution dudit service applicatif sélectionné, pour présentation sur le terminal dudit utilisateur.

L'invention concerne également un procédé de création d'un service applicatif accessible depuis un terminal d'utilisateur et exécuté à partir d'au moins une plateforme de services applicatifs à laquelle ledit terminal est connecté par l'intermédiaire d'au moins un réseau de communication.

Selon l'invention, un tel procédé de création comprend avantageusement :
▪ une étape de création d'un modèle fonctionnel descriptif d'au moins une fonction devant être délivré à un utilisateur par ledit service applicatif;
▪ une étape de création d'au moins une règle de mise en oeuvre propre dudit modèle fonctionnel descriptif et que ledit service applicatif devra respecter au moment de son exécution;
▪ une étape d'enregistrement dans une zone mémoire de ladite plateforme d'une association dudit modèle fonctionnel descriptif avec ladite règle de mise en oeuvre.

La présente invention introduit donc une répartition des rôles dans la décision du service à exécuter au moment même de son invocation. Pour cela, nous intégrons des concepts proches des systèmes sémantiques, comme les services abstraits, concrets et les concepts facilitateurs afin que chaque acteur ne fournisse que les informations qui le concernent les plus et dont il est maître. Ces informations sont seulement combinées lors de l'exécution du service, calculées en temps réel afin de décider quel service est le plus adapté. Ce système permet d'une part de maintenir une liste des services applicatifs à disposition constamment ouverte et modifiable, ces services pouvant être utilisés dynamiquement par d'autres services, et d'autre part de rendre plus légère l'intervention de l'utilisateur final et du concepteur. Il permet également de renforcer le rôle de la plateforme, qui s'occupe de gérer et d'offrir un espace spécifique à l'utilisation des services disponibles sur le réseau.

Il est bien entendu possible d'envisager sans limitation aucune, toutes autres combinaisons des caractéristiques précitées propres du procédé d'exécution précité, ou du procédé de création précité.

Les caractéristiques et avantages techniques de la présente invention ressortiront mieux de la description suivante, faite à titre indicatif et non limitatif, au regard des dessins annexés sur lesquels :
- la figure 1 présente les différents intervenants et liens d'interactions entre ces derniers dans le contexte de l'invention;
- la figure 2 donne un exemple de mise en oeuvre du procédé d'exécution d'un service applicatif conforme à l'invention;
- la figure 3 présente les différentes contraintes d'exécution d'un service applicatif selon l'invention, en fonction des différents intervenants de la figure 1
- la figure 4 illustre le principe général du procédé d'exécution d'un service applicatif correspondant à un modèle fonctionnel descriptif ;
- la figure 5 résume les grandes étapes du procédé d'exécution d'un service applicatif selon l'invention.

Le procédé d'exécution d'un service applicatif selon l'invention vise donc à rendre dynamique le choix d'un service applicatif à instancier au moment de son invocation et/ ou de son exécution, tout en s'appuyant sur un partage des informations propres à différents "acteurs" en jeux, essentiellement le développeur du service, l'utilisateur, l'administrateur d'une plateforme de services applicatifs supportant la mise en oeuvre dudit service.

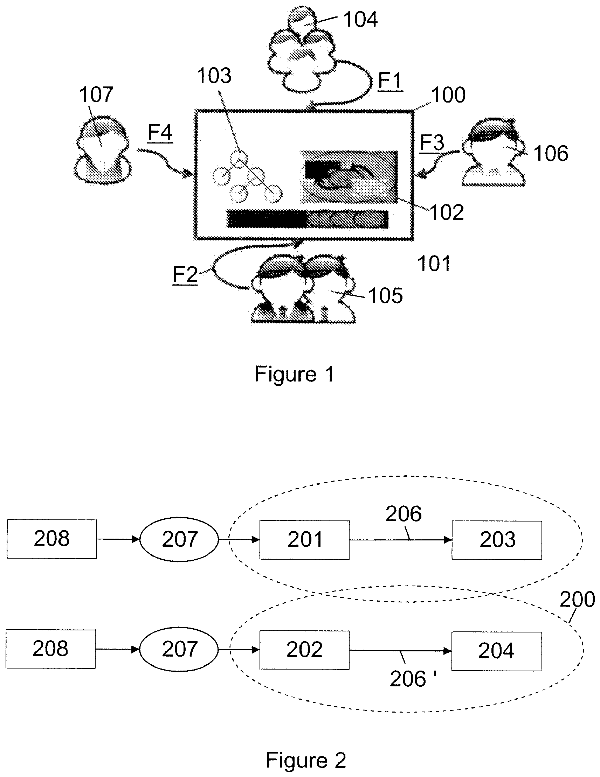

Afin de mieux identifier et préciser quels sont ces acteurs, nous définissons en relation avec la figure 1 un contexte probable d'utilisation pouvant s'apparenter à une place 100 de marché électronique sur laquelle des services applicatifs unitaire 101 ou composés 102 et des modèles 103 fonctionnels descriptifs de ces derniers sont mis à la disposition d'utilisateurs 104 susceptibles de pouvoir accéder/ utiliser (flèche F1) ces services (101, 102) applicatifs.

Une place 100 de marché électronique a pour objectif de collectionner et répertorier un certain nombre de services (101, 102) disponibles sur le Web à fin de les rendre accessibles à des utilisateurs 104 finaux.

Ce "lieu" peut servir à référencer des services propres, des descriptions 103 de services 101 tiers et également proposer des services de plus haut niveau obtenus grâce à la composition 102 de deux ou plusieurs services de la plateforme (e.g. "envois de news traduites", qui proposerait un service d'info du dernier minute couplé avec un service de traduction si la *"news"* est rédigée dans une langage différente de la langue de consultation par un utilisateur, etc.).

Pour cela quatre types d'acteurs principaux sont définis relativement à la plateforme de services selon l'invention: le fournisseur 105 de services, qui gère et exécute ses services publiés (flèche F2) sur la plateforme 100, le développeur 106 (ou concepteur) du service, qui est un utilisateur de la plateforme en tant que "créateur" de services composés et successivement publiés (flèche F3) sur la place 100 de marché électronique (sur la base de services de base déjà publiés par les fournisseurs), l'administrateur 107 de la plateforme de services qui met en oeuvre (flèche F4) et gère ladite plateforme en la mettant à disposition des utilisateurs 104 ; et en fin l'utilisateur final, qui est enregistré sur la plateforme en tant que "consommateur" des services proposés par la place de marché.

Il faut noter que le développeur est un intermédiaire qui peut jouer le rôle d'utilisateur final et de "fournisseur" au même temps.

Nous définissons dans ce document un service comme étant un terme qui fait référence à un système informatique, un logiciel, capable d'exécuter à distance sur un réseau donné toute ou partie d'une fonction précise. Le terme "application" peut être considéré comme un synonyme équivalent.

Nous définissons un service de base, ou service concret, comme un service réel qui est atomique au sens de la description fournie (on a une seule point d'entrée et de sortie pour les données) et qui est atteignable par une URL fixe.

De plus nous introduisons le concept de service abstrait qui est une spécification/description fonctionnelle de services existants de plus haut niveau.

La figure 2 présente un exemple d'un service abstrait d'envoi d'image à partir du Web.

Dans ce service 200 composé, la première tâche propose une recherche 201 d'images (modèle fonctionnel descriptif) qui est réalisée par le service 202 tiers offert par le service 202 applicatif *"Flickr"* (marque déposée), pendant que la deuxième tâche abstraite 203 d'envois de message SMS est réalisé par le service 204 applicatif Orange (marque déposée), ce dernier service pouvant être indifféremment celui-proposé par un autre opérateur tel que Vodafone (marque déposée).

Cette recherche peut tenir compte de critères 207 de recherche préalablement définit dans des fichiers de description 208.

Nous définissons des services composés comme l'union 200, 205 de deux ou plus services dont les données en sortie 206, 206' d'un service 202 constituent les données d'entrée d'un autre 204. Si le service composé contient un ou plus services abstraits, l'on dit service composé abstrait.

Enfin nous définissons le concept facilitateur comme l'élément d'information nécessaire au moteur d'exécution de la plateforme pour choisir en temps réel, parmi tous les services concrets pertinents de la plateforme, le service qui doit être exécuté.

De plus un service auxiliaire est un service qui est associé à un ou plus concepts facilitateurs qui permet de calculer une information additionnelle.

Dans notre cas un concept facilitateur est lié à un service abstrait, et permet donc de compléter l'ensemble d'informations nécessaires pour résoudre une description abstraite en la transformant en service concret en temps réel.

Les concepts facilitateur peuvent être associés à des services abstraits par le développeur du service composé, l'administrateur de la plateforme de services, ou bien l'utilisateur final.

Un développeur de la plateforme qui souhaite définir et publier un service composé sur la base des services concrets existants est donc normalement sensé de fournir la description complète avec inclus les URL. Dans notre invention, un développeur peut se limiter à fournir la description du service abstrait qu'il souhaite mettre en oeuvre et la publier sur la plateforme avec l'ajout des concepts facilitateurs liés aux services abstraits correspondants, définis sur la plateforme. L'appel au service ainsi définit sera transformé par le système de la plateforme, grâce aux services auxiliaires, en service concret uniquement au moment de l'exécution.

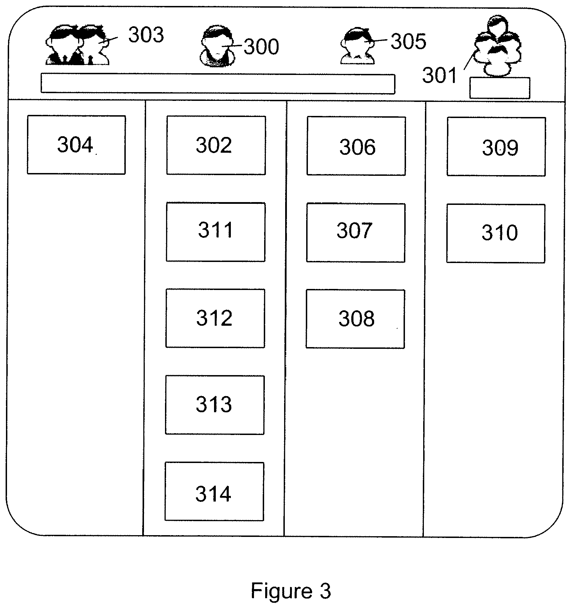

La figure 3 montre la répartition des tâches entre les quatre rôles en jeu dans l'exécution d'un service sur le web. Le rôle de l'administrateur 300 est sûrement le rôle principale qui doit s'occuper de préparer le terrain afin de pouvoir facilement créer les liens entres les services/applications et les concepts permettant de résoudre intelligemment et automatiquement l'appel au service en temps réel. Un administrateur 300 est responsable d'une communauté d'utilisateurs 301 et définit 302 le comportement des services pour cette communauté 301.

Les fournisseurs 303 de services n'ont qu'à s'adapter aux indications de la plateforme et de déclarer 304 leurs services (de façon autonome ou même directement aidé par la plateforme) dans cet espace. A ce sujet une déclaration de Service Web sur une plateforme à l'aide des fiches descriptives WSDL rend bien l'idée de la tâche à effectuer et sa faisabilité.

Le développeur 305, qui dans cette architecture exprime l'ouverture vers un utilisateur potentiel de la plateforme de services selon l'invention, a la possibilité de redéfinir des services sur la base d'autres services existant, et donc la fonction de rendre une plateforme de services évolutive et personnalisable aux utilisateurs finaux. Parmi ces tâches il est appelé à (re)définir 306 les services plus sous un point de vu fonctionnel que opérationnel, au travers la conception de modèles descriptifs fonctionnels au sens de l'invention. Pour ça il doit juste les composer sans l'obligation de rentrer tous les détails pour l'exécution même, mais seulement dire quels sont les variables représentatives (concepts facilitateurs) pour les services qui devront être exécutés par l'utilisateur et déclarer les services ainsi définis sur la plateforme.

Le concepteur associe 307 les différents modèles fonctionnels descriptifs aux services applicatifs qui correspondent à ces derniers et sont fournis par des fournisseurs de services référencés auprès d'une plateforme de services applicatifs au sens de l'invention.

Dans un exemple illustratif et non limitatif, en présence d'un service de traduction multi-langage tel que le service "BableFish" (marque déposée) l'information de base dont nous avons besoin pour exécuter le service ce sont la langue d'entrée et la langue de sortie. Même si ces informations sont très basiques dans l'utilisation du service, c'est le contexte de son utilisation à déterminer la provenance de ces deux valeurs et cela peut changer considérablement.

Le développeur/ concepteur 305 se charge de publier 308 les modèles fonctionnels descriptifs de services applicatifs sur une plateforme de services au sens de l'invention.

Les utilisateurs 301 définissent 309 leurs profils d'utilisateurs auprès de la plateforme de services applicatifs selon l'invention, de façon à pouvoir ensuite accéder et utiliser 310 les services applicatifs qui leur sont rendus disponibles par ladite plateforme de services, par simple sélection auprès de ladite plateforme d'un modèle fonctionnel descriptif.

L'administrateur 300 peut également définir 311 des services auxiliaires sur la plate forme de services, ou bien encore associer 312 des services auxiliaires à des modèles fonctionnels descriptifs déjà existants et mémorisés sur ladite plateforme. Il peut encore définir 313 lui aussi des modèle fonctionnels descriptifs. Il peut enfin associer 314 des services applicatifs à des modèles fonctionnels descriptifs en fonction de critères de priorité permettant d'optimiser le choix dynamique d'un service par rapport à un ou plusieurs autres, lorsque un tel service0 doit être exécuté dynamiquement par la plateforme.

L'utilisateur des services n'a que à créer ou compléter son profile sur la plateforme et choisir les services (avec l'avantage de pouvoir choisir des services fonctionnels tel que "traduction", "recherche de news internationales", etc...) qu'il souhaite utiliser. Son profil peut être associé à des situations déjà existants, comme le compte mobile d'un opérateur téléphonique, ou un profile comme celui géré par une plateforme comme iGoogle (marque déposée), et enrichi de quelque information spécifique selon le besoin.

Ci-dessous sont décrites dans l'ordre les tâches du procédé que nous proposons, telles qu'elles sont exécutées par chaque acteur :
1. La plateforme propose un environnement de gestion du profil des utilisateurs, pour permettre de définir des préférences d'utilisation de services (accès, prix, qualité, langage, etc...);
2. L'administrateur peut associer des services de la plateforme à des systèmes de résolution d'information temps réel. Par exemple résolution de la localisation d'un utilisateur sur la base de la géo-localisation (i.e. s'il utilise un mobile pour accéder à un service seront les coordonnées relative à la position de l'appareil, ou position relative à son adresse IP si connecté par ordinateur), ou résolution de présence associée à son outil de messagerie instantanée; résolution de langage sur la base de la langue de l'utilisateur définie dans son profile; etc.
3. Le développeur au moment de la conception du service, il a le choix de proposer un service concret, un service abstrait ou une combinaison des deux. Si le service proposé contient directement des services concrets le développeur définit au même temps le lien statique au service choisit. Autrement, au lieu de choisir le service réel et de fournir l'URL, choisit parmi un ensemble de concepts facilitateurs, celles qui sont inhérentes au service qu'il est en train de concevoir, et peuvent donc être résolues en temps réel. Ces informations ont la particularité d'être interprétés au moment même de l'exécution du service et permettent donc de résoudre le service abstrait ;
4. La plateforme résout automatiquement les valeurs inhérents aux services abstraits définis par le concepteur, et :
   a. Si plus d'une valeur est associée à chaque services abstrait, le moteur de résolution de la plateforme calcule celui ou ceux qui mieux répondent à la demande sur la base d'une mesure similaire au "rank".
   b. Si sur la base des règles posées par le concepteur et le fournisseur, plusieurs services répondent de façon équivalente au besoin ainsi exprimé, alors une deuxième mesure similaire basée sur les préférences de l'utilisateur final est calculée, et la meilleure est proposée à l'utilisateur
5. L'utilisateur final (qui est enregistré sur la place de marché et que donc possède un profile géré par la plateforme) à la demande d'exécution du service peut choisir parmi ceux qui résultent des deux tâches précédentes (si plus d'une) ou forcer des services spécifiques directement.

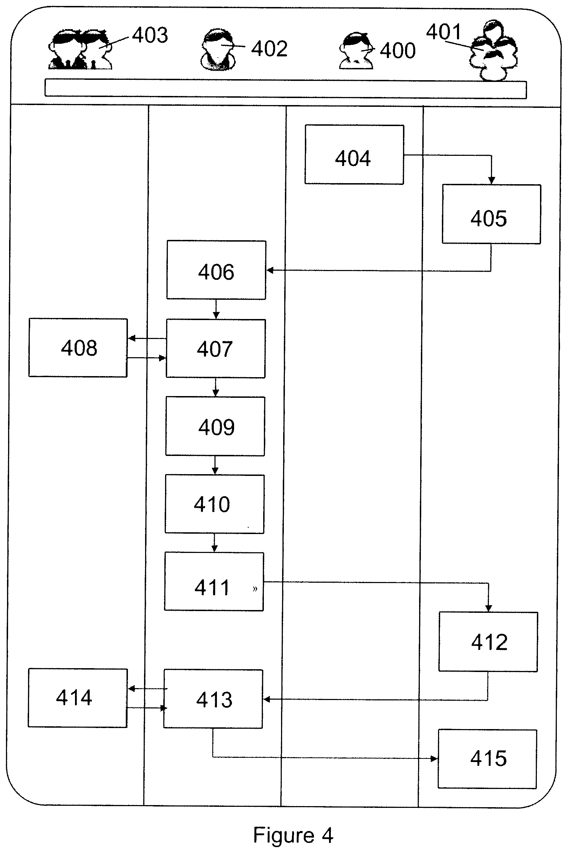

La figure 4 présente un exemple de mise en oeuvre de l'exécution d'un service abstrait, dont les modalités d'exécution sont précisées ci-dessous.

Un développeur publie 404 un service abstrait en définissant deux variables de présence et géolocalisation présélectionnés comme les deux concepts facilitateurs pour le service.

Un utilisateur 401 souhaite contacter une personne. Par le biais de son dispositif (Smartphone ou PC), il sélectionne un contact et l'associe 402 à un service abstrait appelé "contacter" et sélectionne la fiche de contact concernée (invocation d'un service abstrait).

A ce moment la plateforme de services détermine 406 les "meilleurs" services qui répondent à ces deux variables (par exemple le service présence dit que l'utilisateur n'est pas disponible ou en réunion).

Sur la base de cette détermination, elle invoque 407 pour exécution d'au moins un service applicatif mis 408 à disposition par au moins un fournisseur 403 de services - par exemple un service de communication entre individus : appel téléphonique, message vocal et message SMS qui répondent à un besoin fonctionnel de communication.

Parmi ceux-ci il y a une seule instance réelle de service vocal (fournie par Orange - marque déposée, par exemple) qui peut répondre aux premiers deux services et deux qui sont disponibles pour l'envoi d'SMS, fournis par deux opérateurs différents.

A ce moment ces trois "services concrets" du service abstrait "contacter", sont resoumis au même calcul sur la base des préférences de l'utilisateur (409,410). Dans son profil nous pouvons remarquer une priorité sur le prix même du service. A ce moment le fournisseur propose à l'utilisateur de saisir un texte, et donc d'envoyer 411 un SMS en utilisant ainsi le service le moins cher, même s'il présente une moindre qualité (comme pas de confirmation de réception du message...), mais avec la possibilité de basculer 412 facilement vers les autres services disponibles. Enfin, la requête du service choisi est passé à la plateforme, qui met en oeuvre 413 le service abstrait en exécutant ou faisant le lien vers le service applicatif à exécuter (414, 415).

Pour le bon déroulement des taches précédemment décrites certaine actions sont nécessaires tout au long du cycle de vie d'un service; un cycle de vie qui comporte trois étapes nécessaires: Création du service, Publication (déploiement) du service, et exécution (invocation) du service.

### ▪ Création du service :

Un développeur peut créer soit un service unitaire, soit un service composé dans le quel il peut invoquer des services existants ou bien des services abstraits. La plateforme doit ainsi mettre à disposition du développeur la liste des services existants et la liste des services abstraits (pour la réutilisation).

### ▪ Déploiement (publication) du service :

Lorsque le développeur veut publier un service créé, il doit fournir les informations nécessaires pour pouvoir associer ce service à un ou plusieurs services abstraits ; ces information peuvent être donnée par des descriptions sémantique du service ou bien en mappant le service directement à un ou plusieurs services abstraits (par le développeur du service lui même).

Dans le cas ou il n'y a aucun service abstrait qui correspond au service publié, la plateforme dois en créer un et le mapper au service publié.

Cette étape permet à la plateforme de retrouver tous les services existants qui correspondent à un service abstrait invoqué lors de l'étape d'exécution détaillé ci-dessous.

### ▪ Exécution (invocation) du service :

Durant cette étape l'utilisateur invoque le service, qui peut être soit un service unitaire concret, soit un service unitaire abstrait, ou bien un service composé (contenant des services unitaire concret ou abstrait).

Dans le cas ou l'utilisateur invoque un service unitaire concret, ou un service composé contenant que des services unitaires concrets, la plateforme exécute le service de la même manière que ce qui est fait aujourd'hui dans les différentes plateformes d'accès et de composition de service.

Par contre, dans le cas ou l'utilisateur invoque un service unitaire abstrait ou un service composé d'éléments abstraits, la plateforme à besoin d'instancier chaque service unitaire abstrait vers un service unitaire concret (existant). Pour cela, la plateforme récupère d'abord la liste de tous les services qui correspondent au service abstrait invoqué. Cette mise en correspondance ("mapping") entre services existant et service abstrait est sauvegardée durant l'étape de déploiement du service existant. Une fois on a cette liste, la plateforme dois décider lequel (si plus d'un y'en a) va être exécuté. Pour cela nous allons mettre en place un système qui raisonne selon un certain nombre de règles défini par un rôle qui peut être soit un administrateur de la plateforme, l'utilisateur final, un développeur de service,...etc., tel que définis précédemment.

En effet, l'utilisateur peut mettre en place des règles du genre "choisir toujours le service le moins cher". Un développeur de service composé peut vouloir "choisir toujours le service le plus performant" pour que son service soit performant. Et un administrateur peut spécifier une règle comme "Choisir d'abord "prioriser" les services de mon domaine".

Le choix finale est définit en suivant une mesure de meilleur classement ("ranking") entre les choix possibles et, pour les cases où plusieurs solutions peuvent survenir au même temps, le fournisseur de la plateforme peut définir une liste de services par défaut et une priorité entre les préférences des utilisateurs.

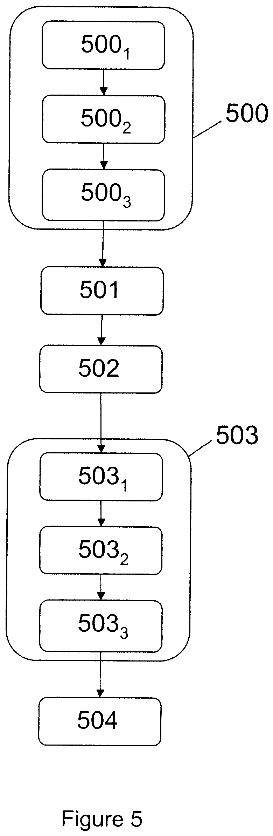

La figure 5 résume les grandes étapes du procédé d'exécution d'un service applicatif accessible depuis un terminal d'utilisateur et exécuté à partir d'au moins une plateforme de services applicatifs à laquelle ledit terminal est connecté par l'intermédiaire d'au moins un réseau de communication.

Selon l'invention, un tel procédé comprend :
▪ une étape 501 de sélection par un utilisateur d'au moins un modèle fonctionnel descriptif d'un service applicatif à exécuter, parmi un ensemble de modèles fonctionnels descriptifs de services applicatifs;
▪ une première étape 502 de transmission par ladite plateforme de services audit terminal d'utilisateur, d'une liste de services applicatifs sélectionnés auprès d'au moins un fournisseur de services et adaptés pour mettre en oeuvre, respectivement, ledit modèle fonctionnel descriptif sélectionné en tenant compte de ladite règle de mise en oeuvre
▪ une étape 503 d'exécution d'au moins un service applicatif sélectionné par l'intermédiaire de ladite plateforme auprès d'au moins un fournisseur de services, ledit service applicatif sélectionné correspondant audit modèle fonctionnel descriptif et respectant au moins une règle de mise en oeuvre propre dudit modèle fonctionnel descriptif;
▪ une deuxième étape 504 de transmission par ladite plateforme au terminal d'utilisateur d'un résultat d'exécution dudit service applicatif sélectionné, pour présentation sur le terminal dudit utilisateur.

Le procédé d'exécution selon l'invention comprend préalablement à ladite première étape 502 de transmission, une étape 500 de création dynamique de ladite liste de services comprenant :
▪ une sous-étape 500₁ de détermination d'au moins une règle de mise en oeuvre associée audit modèle fonctionnel descriptif sélectionné ;
▪ une sous-étape 500₂ d'identification auprès d'au moins un fournisseur de services applicatifs, d'au moins un service applicatif mettant en oeuvre ladite règle de mise en oeuvre ;
▪ une sous-étape 500₃ d'enregistrement d'une association dudit modèle fonctionnel descriptif avec ledit au moins un service applicatif identifié à ladite sous-étape d'identification.

Ladite règle de mise en oeuvre définit au moins une pré-condition et au moins une post-condition d'exécution dudit service applicatif correspondant audit modèle fonctionnel descriptif sélectionné.

Ledit service applicatif est sélectionné et exécuté dynamiquement par ladite plateforme.

Ledit service applicatif est sélectionné par l'utilisateur à partir de ladite liste de services applicatifs reçue sur son terminal d'utilisateur suite à ladite première étape 502 de transmission, une information de sélection étant ensuite remonté depuis ledit terminal d'utilisateur à ladite plateforme en tant que paramètre d'entrée de ladite étape d'exécution.

Ladite étape d'exécution comprend les sous-étapes suivantes:
▪ appel 503₁ à distance dudit service applicatif sélectionné auprès d'un fournisseur de services, ledit appel à distance tenant compte d'au moins un identifiant dudit service applicatif sélectionné ;
▪ exécution 503₂ dudit service applicatif sélectionné par un terminal d'exécution propre dudit fournisseur de services, de façon à produire au moins un résultat d'exécution ;
▪ transmission 503₃ dudit résultat d'exécution par ledit terminal d'exécution à ladite plateforme de services.

Ladite étape 503 d'exécution dynamique tient compte d'au moins une information représentative d'une préférence d'utilisation.

## Revendications

1. Procédé d'exécution d'un service applicatif accessible depuis un terminal d'utilisateur et exécuté à partir d'au moins une plateforme de services applicatifs à laquelle ledit terminal est connecté par l'intermédiaire d'au moins un réseau de communication, ledit procédé étant **caractérisé en ce qu'**il comprend les étapes suivantes, mises en oeuvre par ladite plateforme :
▪ réception (501) d'une notification de sélection par un utilisateur dudit terminal d'utilisateur, d'un modèle fonctionnel descriptif d'un service applicatif à exécuter, parmi un ensemble de modèles fonctionnels descriptifs de services applicatifs;
▪ détermination (500₁) d'au moins une règle de mise en oeuvre associée audit modèle fonctionnel descriptif sélectionné par l'utilisateur ;
▪ identification (500₂) auprès d'au moins un fournisseur de services applicatifs, d'au moins un service applicatif mettant en oeuvre ladite au moins une règle de mise en oeuvre ;
▪ transmission (502) audit terminal d'utilisateur d'une liste d'au moins un service applicatif, identifié lors de l'étape précédente, adapté à mettre en oeuvre, respectivement, ledit modèle fonctionnel descriptif en tenant compte de ladite au moins une règle de mise en oeuvre ;
▪ exécution (503) d'un service applicatif sélectionné par l'utilisateur à partir de ladite liste de services applicatifs transmise audit terminal d'utilisateur ;
▪ transmission (504) audit terminal d'utilisateur d'un résultat d'exécution dudit service applicatif sélectionné, pour présentation sur ledit terminal d'utilisateur.

2. Procédé selon la revendication 1, **caractérisé en ce que** ladite règle de mise en oeuvre définit au moins une pré-condition et au moins une post-condition d'exécution dudit service applicatif correspondant audit modèle fonctionnel descriptif sélectionné.

3. Procédé selon la revendication 1, **caractérisé en ce que** ledit service applicatif est sélectionné et exécuté dynamiquement par ladite plateforme.

4. Procédé selon la revendication 1, **caractérisé en ce que** ledit service applicatif est sélectionné par l'utilisateur à partir de ladite liste de services applicatifs reçue sur son terminal d'utilisateur suite à ladite première étape (502) de transmission, une information de sélection étant ensuite remontée depuis ledit terminal d'utilisateur à ladite plateforme en tant que paramètre d'entrée de ladite étape d'exécution.

5. Procédé selon la revendication 1, **caractérisé en ce que** ladite étape (503) d'exécution comprend les sous-étapes suivantes:
▪ appel 503₁ à distance dudit service applicatif sélectionné auprès d'un fournisseur de services, ledit appel à distance tenant compte d'au moins un identifiant dudit service applicatif sélectionné ;
▪ exécution 503₂ dudit service applicatif sélectionné par un terminal d'exécution propre audit fournisseur de services, de façon à produire au moins un résultat d'exécution ;
▪ transmission 503₃ dudit résultat d'exécution par ledit terminal d'exécution à ladite plateforme de services.

6. Procédé selon la revendication 1, **caractérisé en ce que** ladite étape (503) d'exécution comprend les sous-étapes suivantes:
▪ appel à distance dudit service applicatif sélectionné auprès d'un fournisseur de services, ledit appel à distance tenant compte d'au moins un identifiant dudit service applicatif sélectionné ;
▪ exécution dudit service applicatif appelé par ladite plateforme de service, de façon à produire au moins un résultat d'exécution.

7. Procédé selon la revendication 3, **caractérisé en ce que** ladite étape (503) d'exécution dynamique tient compte d'au moins une information représentative d'une préférence d'utilisation.

8. Procédé selon la revendication 7, **caractérisé en ce que** ladite au moins une information est stockée dans une zone mémoire de ladite plateforme de services et appartient au groupe comprenant :
▪ information représentative d'une préférence d'utilisation préalablement renseignée par ledit utilisateur et mémorisée dans un profile d'utilisateur propre à celui-ci ;
▪ information représentative d'une préférence d'utilisation dudit service applicatif sélectionné, ladite information étant préalablement renseignée par un concepteur dudit modèle descriptif fonctionnel en relation avec ladite règle de mise en oeuvre ;
▪ information représentative d'une préférence d'utilisation dudit service applicatif sélectionné, ladite information étant préalablement renseignée par un administrateur de ladite plateforme et mémorisée dans une zone mémoire de cette dernière.

9. Procédé selon la revendication 1, **caractérisé en ce que** ladite étape (503) d'exécution est une étape d'exécution d'une combinaison d'au moins deux services applicatifs sélectionnés par l'intermédiaire de ladite plateforme auprès d'au moins un fournisseur de services, respectivement, ladite combinaison correspondant audit modèle fonctionnel descriptif et respectant au moins une règle de mise en oeuvre propre audit modèle fonctionnel descriptif.

10. Plateforme de services applicatifs proposant au moins un service applicatif accessible à partir d'un terminal d'utilisateur connecté à ladite plateforme par l'intermédiaire d'au moins un réseau de communication, ladite plateforme étant **caractérisé en ce qu'**elle comprend:
▪ des moyens de réception d'une sélection par un utilisateur dudit terminal d'utilisateur, d'au moins un modèle fonctionnel descriptif d'un service applicatif à exécuter, parmi un ensemble de modèles fonctionnels descriptifs de services applicatifs;
▪ des moyens de détermination d'au moins une règle de mise en oeuvre associée audit modèle fonctionnel descriptif sélectionné par l'utilisateur ;
▪ des moyens d'identification auprès d'au moins un fournisseur de services applicatifs, d'au moins un service applicatif mettant en oeuvre ladite au moins une règle de mise en oeuvre ;
▪ des moyens de transmission audit terminal d'utilisateur d'une liste d'au moins un service applicatif, identifié par lesdits moyens d'identification, adapté à mettre en oeuvre, respectivement, ledit modèle fonctionnel descriptif en tenant compte de ladite au moins une règle de mise en oeuvre ;
▪ des moyens d'exécution d'un service applicatif sélectionné par l'utilisateur à partir de ladite liste de services applicatifs transmise audit terminal d'utilisateur;
▪ des moyens de transmission audit terminal d'utilisateur d'un résultat d'exécution dudit service applicatif sélectionné, pour présentation sur ledit terminal d'utilisateur.

11. Terminal d'utilisateur adapté pour exécuter un service applicatif accessible à partir d'une plateforme de services applicatifs à laquelle il est connecté par l'intermédiaire d'au moins un réseau de communication, ledit terminal étant **caractérisé en ce qu'**il comprend:
▪ des moyens de sélection, par un utilisateur dudit terminal, d'au moins un modèle fonctionnel descriptif d'un service applicatif à exécuter, parmi un ensemble de modèles fonctionnels descriptifs de services applicatifs ; et de notification de ladite sélection à ladite plateforme;
▪ des moyens de réception, en provenance de ladite plateforme, d'une liste d'au moins un service applicatif identifié par ladite plateforme auprès d'au moins un fournisseur de services applicatifs, ledit au moins un service applicatif mettant en oeuvre au moins une règle de mise en oeuvre associée audit modèle fonctionnel ;
▪ des moyens de sélection d'un service applicatif par l'utilisateur dudit terminal d'utilisateur, à partir de ladite liste de services applicatifs, et de notification dudit service applicatif sélectionné à destination de ladite plateforme ;
▪ des moyens de réception en provenance de ladite plateforme d'au moins un résultat d'exécution dudit service applicatif sélectionné ;
▪ des moyens d'affichage dudit au moins un résultat d'exécution dudit service applicatif sélectionné.

12. Produit programme d'ordinateur téléchargeable depuis un réseau de communication et/ou stocké sur un support lisible par un ordinateur, **caractérisé en ce qu'**il comprend des instructions de code de programme adaptées à la mise en oeuvre d'un procédé d'exécution d'un service applicatif selon l'une quelconque des revendications 1 à 9, lorsque ledit programme est exécuté dans un ordinateur.

## Patentansprüche

1. Verfahren zur Ausführung eines Anwendungsdiensts, der von einem Benutzerendgerät aus zugänglich ist und ausgehend von mindestens von einer Plattform von Anwendungsdiensten ausgeführt wird, mit der das Endgerät über mindestens ein Kommunikationsnetz verbunden ist, wobei das Verfahren **dadurch gekennzeichnet ist, dass** es die folgenden Schritte enthält, die von der Plattform durchgeführt werden:
• Empfang (501) einer Auswahlmitteilung von einem Benutzer des Benutzerendgeräts eines deskriptiven Funktionsmodells eines auszuführenden Anwendungsdiensts unter einer Einheit von deskriptiven Funktionsmodellen von Anwendungsdiensten;
• Festlegung (500₁) mindestens einer Durchführungsregel, die dem vom Benutzer ausgewählten deskriptiven Funktionsmodell zugeordnet ist;
• Erkennung (500₂) bei mindestens einem Anwendungsdiensteanbieter mindestens eines Anwendungsdiensts, der die mindestens eine Durchführungsregel durchführt;
• Übertragung (502) an das Benutzerendgerät einer Liste mindestens eines Anwendungsdiensts, der im vorhergehenden Schritt erkannt wurde, der geeignet ist, das deskriptive Funktionsmodell unter Berücksichtigung der mindestens einen Durchführungsregel durchzuführen;
• Ausführung (503) eines vom Benutzer ausgehend von der an das Benutzerendgerät übertragenen Liste von Anwendungsdiensten ausgewählten Anwendungsdiensts;
• Übertragung (504) an das Benutzerendgerät eines Ergebnisses der Ausführung des ausgewählten Anwendungsdiensts, zur Darstellung auf dem Benutzerendgerät.

2. Verfahren nach Anspruch 1, **dadurch gekennzeichnet, dass** die Durchführungsregel mindestens eine Vorbedingung und mindestens eine Nachbedingung der Ausführung des Anwendungsdiensts entsprechend dem ausgewählten deskriptiven Funktionsmodell definiert.

3. Verfahren nach Anspruch 1, **dadurch gekennzeichnet, dass** der Anwendungsdienst dynamisch von der Plattform ausgewählt und ausgeführt wird.

4. Verfahren nach Anspruch 1, **dadurch gekennzeichnet, dass** der Anwendungsdienst vom Benutzer ausgehend von der Liste von Anwendungsdiensten ausgewählt wird, die auf seinem Benutzerendgerät nach dem ersten Schritt (502) der Übertragung empfangen wird, wobei eine Auswahlinformation anschließend vom Benutzerendgerät zur Plattform als Eingangsparameter des Ausführungsschritts weitergeleitet wird.

5. Verfahren nach Anspruch 1, **dadurch gekennzeichnet, dass** der Ausführungsschritt (503) die folgenden Teilschritte enthält:
• Fernabruf 503₁ des ausgewählten Anwendungsdiensts bei einem Diensteanbieter, wobei der Fernabruf mindestens eine Kennung des ausgewählten Anwendungsdiensts berücksichtigt;
• Ausführung 503₂ des ausgewählten Anwendungsdiensts durch ein dem Diensteanbieter gehörendes Ausführungsendgerät, um mindestens ein Ausführungsergebnis zu erzeugen;
• Übertragung 503₃ des Ausführungsergebnisses durch das Ausführungsendgerät an die Diensteplattform.

6. Verfahren nach Anspruch 1, **dadurch gekennzeichnet, dass** der Ausführungsschritt (503) die folgenden Teilschritte enthält:
• Fernabruf des ausgewählten Anwendungsdiensts bei einem Diensteanbieter, wobei der Fernabruf mindestens eine Kennung des ausgewählten Anwendungsdiensts berücksichtigt;
• Ausführung des von der Dienstplattform abgerufenen Anwendungsdiensts, um mindestens ein Ausführungsergebnis zu erzeugen.

7. Verfahren nach Anspruch 3, **dadurch gekennzeichnet, dass** der Schritt (503) der dynamischen Ausführung mindestens eine für eine bevorzugte Benutzung repräsentative Information berücksichtigt.

8. Verfahren nach Anspruch 7, **dadurch gekennzeichnet, dass** die mindestens eine Information in einem Speicherbereich der Diensteplattform gespeichert wird und zu der Gruppe gehört, die enthält:
• eine Information, die für eine bevorzugte Benutzung repräsentativ ist, die vorher vom Benutzer mitgeteilt und in einem Benutzerprofil gespeichert wurde, das diesem eigen ist;
• eine Information, die für eine bevorzugte Benutzung des ausgewählten Anwendungsdiensts repräsentativ ist, wobei die Information vorher von einem Systemprogrammierer des deskriptiven Funktionsmodells in Zusammenhang mit der Durchführungsregel mitgeteilt wird;
• eine Information, die für eine bevorzugte Benutzung des ausgewählten Anwendungsdiensts repräsentativ ist, wobei die Information vorher von einem Administrator der Plattform mitgeteilt und in einem Speicherbereich dieser letzteren gespeichert wird.

9. Verfahren nach Anspruch 1, **dadurch gekennzeichnet, dass** der Ausführungsschritt (503) ein Ausführungsschritt einer Kombination von mindestens zwei ausgewählten Anwendungsdiensten durch die Plattform bei mindestens einem Diensteanbieter ist, wobei die Kombination dem deskriptiven Funktionsmodell entspricht und mindestens eine Durchführungsregel beachtet, die dem deskriptiven Funktionsmodell eigen ist.

10. Anwendungsdienste-Plattform, die mindestens einen Anwendungsdienst anbietet, der ausgehend von einem Benutzerendgerät zugänglich ist, das mit der Plattform durch mindestens ein Kommunikationsnetz verbunden ist, wobei die Plattform **dadurch gekennzeichnet ist, dass** sie enthält:
• Einrichtungen zum Empfang einer Auswahl durch einen Benutzer des Benutzerendgeräts mindestens eines deskriptiven Funktionsmodells eines auszuführenden Anwendungsdiensts unter einer Einheit von deskriptiven Funktionsmodellen von Anwendungsdiensten;
• Einrichtungen zur Festlegung mindestens einer Durchführungsregel, die dem vom Benutzer ausgewählten deskriptiven Funktionsmodell zugeordnet ist;
• Einrichtungen zur Erkennung bei mindestens einem Anwendungsdiensteanbieter mindestens eines Anwendungsdiensts, der die mindestens eine Durchführungsregel durchführt;
• Einrichtungen zur Übertragung an das Benutzerendgerät einer Liste von mindestens einem Anwendungsdienst, der von den Erkennungseinrichtungen erkannt wird, der geeignet ist, das deskriptive Funktionsmodell durchzuführen unter Berücksichtigung der mindestens einen Durchführungsregel;
• Einrichtungen zur Ausführung eines vom Benutzer ausgehend von der Liste von Anwendungsdiensten ausgewählten Anwendungsdiensts, die an das Benutzerendgerät übertragen wurde;
• Einrichtungen zur Übertragung an das Benutzerendgerät eines Ausführungsergebnisses des ausgewählten Anwendungsdiensts zur Darstellung auf dem Benutzerendgerät.

11. Benutzerendgerät, das geeignet ist, einen ausgehend von einer Anwendungsdienste-Plattform zugänglichen Anwendungsdienst auszuführen, mit der es über mindestens ein Kommunikationsnetz verbunden ist, wobei das Endgerät **dadurch gekennzeichnet ist, dass** es enthält:
• Einrichtungen zur Auswahl durch einen Benutzer des Endgeräts mindestens eines deskriptiven Funktionsmodells eines auszuführenden Anwendungsdiensts unter einer Einheit von deskriptiven Funktionsmodellen von Anwendungsdiensten; und zur Mitteilung der Auswahl an die Plattform;
• Einrichtungen zum Empfang von der Plattform einer Liste von mindestens einem von der Plattform erkannten Anwendungsdiensts bei mindestens einem Anwendungsdiensteanbieter, wobei der mindestens eine Anwendungsdienst mindestens eine dem Funktionsmodell zugeordnete Durchführungsregel durchführt;
• Einrichtungen zur Auswahl eines Anwendungsdiensts durch den Benutzer des Benutzerendgeräts ausgehend von der Liste von Anwendungsdiensten, und zur Mitteilung des ausgewählten Anwendungsdiensts an die Plattform;
• Einrichtungen zum Empfang von der Plattform mindestens eines Ausführungsergebnisses des ausgewählten Anwendungsdiensts;
• Einrichtungen zur Anzeige des mindestens einen Ausführungsergebnisses des ausgewählten Anwendungsdiensts.

12. Computerprogrammprodukt, das von einem Kommunikationsnetz heruntergeladen werden kann und/oder auf einem computerlesbaren Träger gespeichert ist, **dadurch gekennzeichnet, dass** es Programmcodeanweisungen enthält, die für die Durchführung eines Verfahrens zur Ausführung eines Anwendungsdiensts nach einem der Ansprüche 1 bis 9 geeignet sind, wenn das Programm in einem Computer ausgeführt wird.

## Claims

1. Method for executing an application service accessible from a user terminal and executed from at least one application services platform to which said terminal is connected by way of at least one communication network, said method being **characterized in that** it comprises the following steps, implemented by said platform:
▪ receiving (501) a notification of selection by a user of said user terminal, of a descriptive functional model of an application service to be executed, from among a set of descriptive functional models of application services;
▪ determining (500₁) at least one implementation rule associated with said descriptive functional model selected by the user;
▪ identifying (500₂) via at least one provider of application services, at least one application service implementing said at least one implementation rule;
▪ transmitting (502) to said user terminal a list of at least one application service, identified during the previous step, adapted to implement, respectively, said descriptive functional model while taking account of said at least one implementation rule;
▪ executing (503) an application service selected by the user from said list of application services which is transmitted to said user terminal;
▪ transmitting (504) to said user terminal an execution result of said application service selected, for presentation on said user terminal.

2. Method according to Claim 1, **characterized in that** said implementation rule defines at least one pre-condition and at least one post-condition of execution of said application service corresponding to said selected descriptive functional model.

3. Method according to Claim 1, **characterized in that** said application service is selected and executed dynamically by said platform.

4. Method according to Claim 1, **characterized in that** said application service is selected by the user from said list of application services which is received on his user terminal subsequent to said first transmission step (502), a selection item of information thereafter being uploaded from said user terminal to said platform as input parameter of said execution step.

5. Method according to Claim 1, **characterized in that** said execution step (503) comprises the following sub-steps:
▪ remote calling 503₁ of said application service selected via a service provider, said remote calling taking account of at least one identifier of said application service selected;
▪ execution 503₂ of said application service selected by an execution terminal specific to said service provider, so as to produce at least one execution result;
▪ transmission 503₃ of said execution result by said execution terminal to said service platform.

6. Method according to Claim 1, **characterized in that** said execution step (503) comprises the following sub-steps:
▪ remote calling of said application service selected via a service provider, said remote calling taking account of at least one identifier of said application service selected;
▪ execution of said application service called by said service platform, so as to produce at least one execution result.

7. Method according to Claim 3, **characterized in that** said dynamic execution step (503) takes account of at least one item of information representative of a preference of use.

8. Method according to Claim 7, **characterized in that** said at least one item of information is stored in a memory area of said service platform and belongs to the group comprising:
▪ an item of information representative of a preference of use previously advised by said user and stored in a user profile specific to the user;
▪ an item of information representative of a preference of use of said application service selected, said item of information being previously advised by a designer of said functional descriptive model in conjunction with said implementation rule;
▪ an item of information representative of a preference of use of said application service selected, said item of information being previously advised by an administrator of said platform and stored in a memory area of the latter.

9. Method according to Claim 1, **characterized in that** said execution step (503) is a step of executing a combination of at least two application services selected by way of said platform via at least one service provider, respectively, said combination corresponding to said descriptive functional model and complying with at least one implementation rule specific to said descriptive functional model.

10. Application services platform offering at least one application service accessible from a user terminal connected to said platform by way of at least one communication network, said platform being **characterized in that** it comprises:
▪ means for receiving a selection by a user of said user terminal, of at least one descriptive functional model of an application service to be executed, from among a set of descriptive functional models of application services;
▪ means for determining at least one implementation rule associated with said descriptive functional model selected by the user;
▪ means for identifying via at least one provider of application services, at least one application service implementing said at least one implementation rule;
▪ means for transmitting to said user terminal a list of at least one application service, identified by said identifying means, adapted to implement, respectively, said descriptive functional model while taking account of said at least one implementation rule;
▪ means for executing an application service selected by the user from said list of application services which is transmitted to said user terminal;
▪ means for transmitting to said user terminal an execution result of said application service selected, for presentation on said user terminal.

11. User terminal adapted to execute an application service accessible from an application services platform to which it is connected by way of at least one communication network, said terminal being **characterized in that** it comprises:
▪ means for selecting, by a user of said terminal, at least one descriptive functional model of an application service to be executed, from among a set of descriptive functional models of application services; and for notifying said selection to said platform;
▪ means for receiving, from said platform, a list of at least one application service identified by said platform via at least one provider of application services, said at least one application service implementing at least one implementation rule associated with said functional model;
▪ means for selecting an application service, by the user of said user terminal, from the list of application services, and for notifying said application service selected destined for said platform;
▪ means for receiving from said platform at least one execution result of said application service selected;
▪ means for displaying said at least one execution result of said application service selected.

12. Computer program product downloadable from a communication network and/or stored on a medium readable by computer, **characterized in that** it comprises program code instructions adapted for the implementation of a method for executing an application service according to any one of Claims 1 to 9, when said program is executed in a computer.
